# EUROPEAN PATENT SPECIFICATION

(11) **EP 2 201 998 B1**
(45) Date of publication and mention of the grant of the patent: **07.05.2014**
(21) Application number: 08425814.4
(22) Date of filing: 23.12.2008
(51) Int. Cl.: B01J 2/00, B01J 2/16

(54) **Apparatus for coating solid particles and related method**
Vorrichtung zur Feststoffbeschichtung und Methode dafür
Appareil pour l'enrobage de particules solides et méthode y afférant

(43) Date of publication of application: 30.06.2010
(73) Proprietor: Tajariol, Ruggero, 33170 Pordenone (PN) (IT)
(72) Inventor: Tajariol, Ruggero, 33170 Pordenone (PN) (IT)
(74) Representative: Giugni, Diego

(56) References cited:
- US-A- 3 110 626
- US-A- 3 880 116
- US-A- 4 117 801

## Description

### Field of the Invention

The present invention refers to an apparatus of the fluidized-bed kind for coating solid particles and, in particular, an apparatus for coating - with waxes or other coating excipients in the liquid state thereof - solid particles of substances of a different nature, such as chemical or food substances, micro-organisms. In addition, the present invention refers to a process for coating said particles.

### Technical Background of the Invention

Largely known in the art are various processes and apparatuses for coating substances of the most varied nature with covering layers aimed at - for instance - protecting such substances against contaminations by external agents, such as chemical or physical agents, bacteria, or assigning such substances with particular properties of resistance to given conditions. These coatings may therefore be represented by protective or heat-resistant, moisture-resistant waxes or waxes with marked pH-resistance properties, which are effective in enabling the coated substances to be properly preserved for a given period of time without any possible alteration of the properties thereof, or - as in the case of pharmaceutical substances - in enabling the active principle in the drug to pass unaffected through the stomach and ensuring due intestinal absorption thereof.

The most commonly used processes and apparatuses for the production of such coated substances are based on the use of a fluidized bed or a recirculation system, in which solid particles are brought and held in a suspension and allowed to come in contact with a coating substance. This coating substance is sprayed or atomized in the form of minute droplets that settle onto the surface of said particles, thereby covering them.

An apparatus working according to said recirculation principle is for instance described in the US patent publication no. 3,110,626. Such apparatus consists in a coating chamber in the shape of a reversed frustum of cone, in the narrowest portion of which there is axially accommodated a cone for controlling the concentration of the flow rate of the fluidized bed. The narrow portion of the coating chamber is then formed so as to continuously - i.e. as a unitary single-piece construction - join into a Venturi-type conduit, inside which there is housed an atomizing injector covered by a member for guiding the fluid of the fluidized bed into the above-mentioned control cone. Finally, the apparatus comprises a recycling system for coated particles that do not fall into the narrow portion of the chamber, but are rather recovered into the larger apical portion thereof to be then introduced again in the region below the injector.

Although effective in reducing the risk of the formation of agglomerations, such apparatus has a drawback represented by an unsatisfactory coating effect due to the particles passing through the coating cloud under non-uniform conditions, thereby giving rise to uneven coatings. Furthermore, the construction of such apparatus turns out as being particularly complex and it has been found that exactly the provision of a conical member inside the coating chamber, if it tends to regularize the rate of the particle entrainment flow on the one side, is on the other side instrumental in practically creating a hindrance that opposes any adequate return flow of the particles into the coating zone of the coating substance. In fact, for the desired recirculation effect to be obtained, it has been necessary to provide an appropriate circuit outside the coating chamber, which collects the particles from the top portion thereof and - via a channel running externally and parallel to said coating chamber - introduces them again below the atomizing injector. Moreover, the coating chamber itself practically forms a Venturi-type system, above which there is arranged the above-mentioned guide member, whereas the injector is positioned in the throat of the Venturi. Finally, this apparatus does not contemplate any fluidized-bed basic type of working.

In an attempt to solve the above-noted problems, the US patent publication no. 5,718,764 provides a fluidized-bed apparatus that is comprised of a housing provided with a treatment chamber that is closed at the bottom thereof by a perforated base plate, at the level of which there is located an injector designed to issue a coating liquid, a rotationally symmetrical wall placed above said injector and spaced therefrom, means for delivering a flow of gas from the bottom towards said walls and comprising an annular aperture between the base plate and the injector, gas guide walls provided below said plate and extending from said aperture by widening out downwards. These guide walls extend inside a chamber that is connected to a source of gas at a greater pressure than the pressure existing above said base plate. Finally, the apparatus further includes means provided to impart a whirling motion to the flow of gas that flows through said guide walls and said annular aperture. In this way, the turbulence created by the whirling means is removed from the guide walls and a high-velocity flow under essentially laminar conditions is created, thereby ensuring a uniform coating of the particles.

In spite of this, neither this apparatus can be said to be free from drawbacks. In fact, the system described above does not allow for any real regularization of the flux of particles entering the rotationally symmetrical wall, where coating takes place. Particles tend to gather and pile upon the base plate prior to flow into and across said symmetrical wall, and are kept in an agitated state by causing gas to flow through the perforations provided in the plate. It has been found that this system only handles parties in a not fully orderly manner and, in any case, does not allow for any continuous passage and motion pattern of the particles, which, after a first passage across the coating zone, heap up at the sides of the related chamber, dwelling there for a variable, undefined period of time until they are attracted again into the same chamber in a rather fortuitous manner. As a result, no real control over the homogeneousness of the coating can be ensured, actually.

US 3,880,116 discloses an apparatus including an upstanding casing having a generally cylindrical upper section and a downwardly tapered frusto-conical lower section terminating in an air inlet. A second casing extends about the lower section of the first casing and defines (along with the outer surface of the first casing) a plenum chamber leading downwardly and inwardly from at least one elevated air entry port to the lower inlet opening for the main or first casing. This complicated structure does not allow the regularization of the flux of particles to be coated.

US 4,117,801 discloses a particle supporting screen extending transversely across the base of the coating chamber, thus creating an obstacle to the flow of the carrying fluid, so that no straight flow from a delivery conduit of a carrying fluid is possible.

### Summary of the Invention

Therefore, the technical problem lying at the roots of the present invention consists in doing away with the above-noted drawbacks encountered with the apparatuses and the corresponding processes for coating solid particles according to the prior art.

This problem is solved through the provision of an apparatus and a process, in which the structural component parts and the working and processing steps are simplified and so designed as to allow for a continuous, regular and orderly flow of the particles that repeatedly pass above the atomizing injector of the coating substance.

Accordingly, it is a first purpose of the present invention to provide an apparatus for coating solid particles with coating substances or agents, such as waxes or glues used in the pharmaceutical or food industry, as recited in the appended claims. In addition, the apparatus may be used to carry out processes for the wet granulation of powders.

A second purpose of the present invention is to provide a process for coating solid particles with coating substances or granulating powders with excipients binding in aqueous solutions or dissolved in organic solvents.

### Short Description of the Drawings

Further features and advantages of the process and apparatus of the invention will become apparent and be more readily understood from the description of an exemplary embodiment that is given below by way of non-limiting example with reference to the accompanying drawings, in which:
- Figure 1 is a schematic, cross-sectional side view of a detail of the apparatus according to the present invention;
- Figure 2 is a schematic side view of a plant comprising the apparatus according to the present invention.

### Detailed Description of the Invention

The basic idea, which the present invention is founded on, derives from the observation that, in a coating process performed in a turbulence chamber by means of a forced gas stream adapted to keep the product under equi-stream conditions relative to the atomizing flow of the coating substances, the use of the Venturi principle in view of trying to regularize and reiterate the passage of the particles through a cloud of molten wax does not ensure any effective coating result, actually. It has in fact been noticed that the particles coated are scarcely resistant, i.e. quite sensitive to temperature and/or moisture, so that they are scarcely suited to the use which they are intended for.

In view of improving such process, extensive experimental work aimed at identifying the optimum conditions capable of ensuring effective coating results in a coating system as the afore-described one has been carried out.

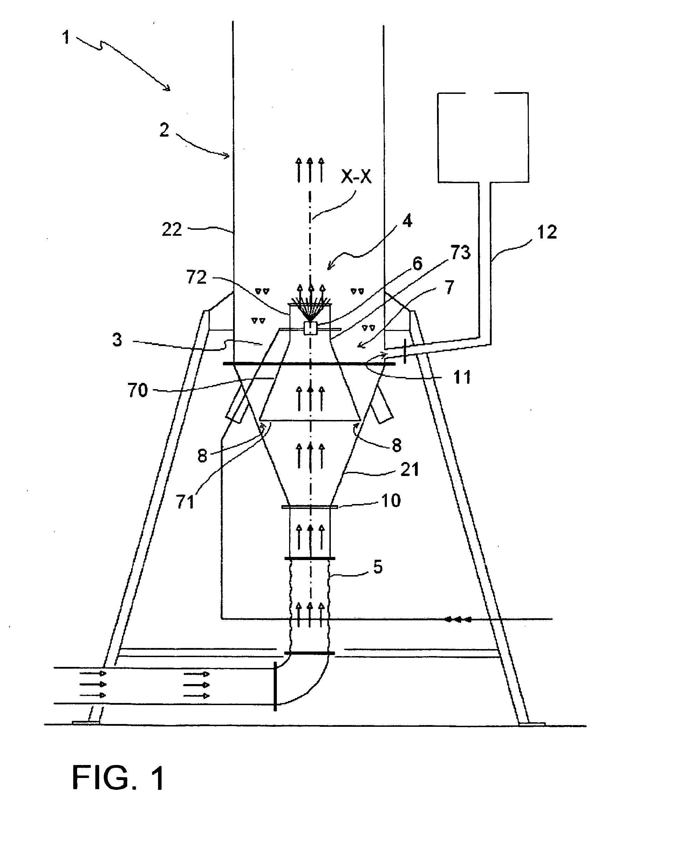

Accordingly, with reference to Figure 1, an apparatus 1 has been developed for coating solid particles in a fluidized bed through the atomization or sprinkling of coating agents comprising a particle agitation chamber 2; a conduit 5 for the delivery of a fluid aimed at creating the flow of said fluidized bed, connected to said particle agitation chamber 2 via a lower portion 21 of said chamber; an injector 6 for the delivery of the coating agents in the form of minute droplets, situated inside guide means 7 to guide the carrying fluid of the fluidized bed into said agitation chamber, wherein said guide means 7 comprise a hollow frustum of cone 70 positioned inside a first zone 3 of the particle agitation chamber 2, where said particles undergo an acceleration, with the flared edge 71 thereof facing, i.e. turned towards said conduit 5 so as to delimitate, jointly with the inner walls of said portion 21, an annular passage 8 positioned below the injector 6 and adapted to enable the particles to recirculate in the agitation chamber 2.

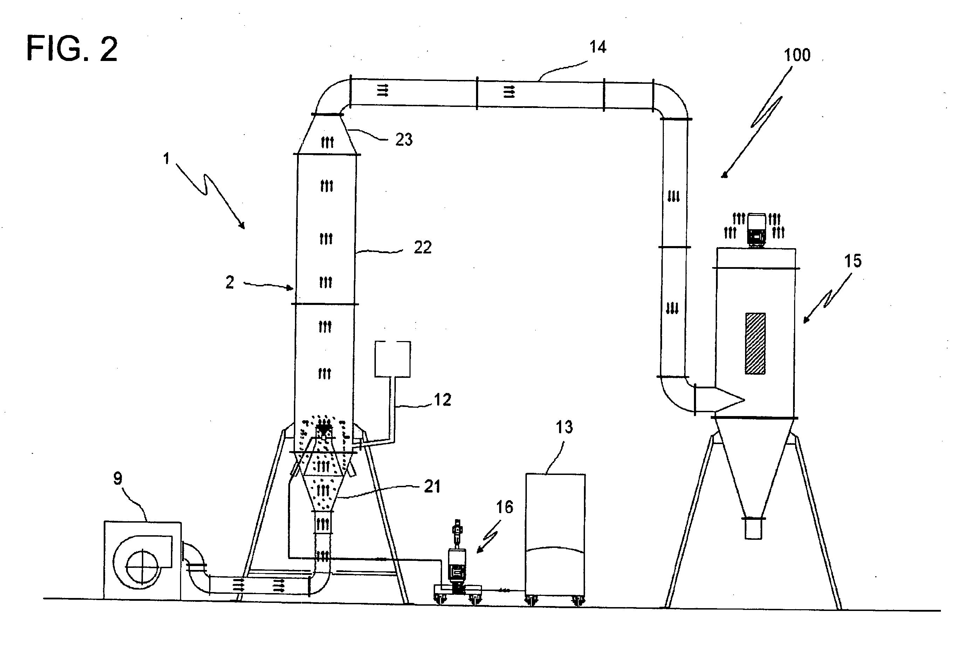

As this is best shown in Figure 2, the particle agitation chamber 2 is represented by a substantially cylindrical hollow column that rises in an upright position and comprises, upstream to the circulation of the particle carrying fluid, the above-mentioned lower portion 21 tapering in the direction towards the delivery conduit 5, where the particles come into contact with the flow of the particle carrying fluid, followed by a substantially cylindrical intermediate portion 22, where the particles are routed into an axial channel X-X and allowed to expand around said channel, and terminating with an upward tapering portion 23 to collect the flow of said particle carrying fluid.

In particular, inside the chamber 2, between the intermediate portion 22 and the lower portion 21, there can be found the afore-mentioned first zone 3, in which the particles undergo an acceleration, followed - at a point situated downstream from the flow of the particle carrying fluid - by a second zone 4, where the particles slow down, as this shall be explained further on.

The conduit 5 is then connected with a blower 9 of a conventional kind for creating said flow. Preferably, along the path followed by said conduit 5 there may be provided a filter/conditioner (not shown) for controlling the moisture, the temperature and the pureness of the fluid being let into the same chamber 2. Furthermore, the blower 9 may preferably be so rated as to operate at a flow rate situated anywhere between 2,500 and 4,000 m³/hr.

The tapered portion 21 of the chamber 2 is connected to the conduit 5 via a finely perforated plate 10 adapted to enable the fluid of the fluidized bed to pass therethrough and, at the same time, support the particles to be treated when these are loaded in the apparatus prior to the latter being started. In addition, such plate may at the same time work so as to prevent said particles from accidentally falling into the delivery conduit 5 during the treatment cycle. The plate 10 may be constituted of a frame of a rigid material supporting a wire mesh of metal or any other material, such as for instance plastic fibres that are typical of air filters provided with perforations sized so as to be able to retain the particles that are from time to time selected for the coating treatment.

The side wall of the intermediate portion 22 is provided with an aperture 11 communicating with a conduit 12 for letting in the particles to be treated.

Moving further on downstream from said flow of the fluid, at the level of the first zone 3 of said agitation chamber there are housed the guide means 7 to guide the fluid of the fluidized bed into the treatment chamber 2. As this has already been explained hereinbefore, the guide means 7 are represented by a hollow frustum of cone 70, the larger rim or mouth 71 of which is turned towards, i.e. facing the delivery conduit 5. In particular, such larger rim 71 delimits, jointly with the inner wall of the tapered portion 21, the annular passage 8.

Preferably, at the level of the narrower rim or mouth 73 thereof, the truncated cone 70 is provided with an annular extension 72, the purpose of which is to route in a more orderly manner the flow exiting the truncated cone.

Inside said frustum of cone 70 there is housed the injector 6. Preferably, this injector 6 is so positioned as to have the aperture thereof located inside the extension 72 of the frustum of cone. In fact, it has been found that, in this position, the flow of the particle carrying fluid, owing to its being more regular and orderly, allows optimum coating results to be obtained even in the case of particles that are more difficult to treat. In particular, such situation arises whenever the coating substance is represented by a wax or, anyway, a coating substance of a certain density. It has moreover been found that, especially in the case of dense substances of a wax-like nature, if the atomization takes place far from the outlet of the guide means 7 the coating droplets tend to set inside these same means. Such occurrence gives rise to the drawback lying in the coating agent being practically unable to duly settle and stratify onto the product.

In particular, the injector 6 is an atomizing or misting one, adapted to produce minute droplets. As is largely known, in fact, atomizing or misting means reducing a liquid into tiny particles. This is obtained by forcing a liquid fluid into and through an orifice at a very high pressure. Preferably, the injector is of the conical type. More preferably, the injector is provided with an orifice of anywhere between 0.4064 and 0.5588 mm (0.016 and 0.022 inches), with a slanting angle of the cone situated anywhere between 10° and 65°.

The high pressure needed to atomize the coating fluid can be provided by means of a pump 16 which, when connected to a reservoir 13 containing the liquid coating substance (as shown in Figure 2), forces the coating substance to pass through the injector and issue therefrom at a pressure situated anywhere between 1 and 7 bar.

In other words, according to what has been described hitherto, the apparatus 1 enables solid particles to be coated in a fluidized bed by having wax or other excipients in the liquid state thereof sprayed. The apparatus is constructed of an expansion chamber 22 for cooling down or drying the product in accordance with the coating agent used. In the coating zone 3, the particles are channelled in an airflow and carried on through the cloud of molten wax or coating excipient. The turbulence of the powder of the substance to be treated is brought about by the airflow issuing from the delivery conduit 5, which acts as a Venturi-type injector. The cone 7, on the contrary, acts as a Venturi-type ejector to guide the turbulences of the fluidized bed in the coating chamber. In this way, the particles come into close contact with the atomized liquid, thereby being coated by it to then issue from the ejector cone and fall into the passage 8, where they are drawn in by suction due to Venturi effect and forced to flow again through the cone 7 and the liquid excipient atomized by the injector 6, thereby being subject to further coating. The just described cycle is repeated throughout a pre-determined period of time.

As illustrated in Figure 2, the recovery zone 23 of the chamber 2 of the particle carrying fluid is connected in a tightly sealed manner with an apparatus 15 for collecting the particles of solidified coating agent so as to enable the same to be recovered, thereby forming a whole plant 100. In fact, when connected to the apparatus 1 via an appropriate conduit 14, the apparatus 14 recovers the carrying fluid with any possible particle of solidified coating substance that may have failed to bind on to the product to be coated, and which is usually employed in an excess amount just in view of ensuring a sufficient provision of coating agent.

The apparatus 15 is represented by a column similar to the column of the chamber 2 of the apparatus 1, and consists in a conventional cyclone powder separator/collector. Advantageously, such apparatus 15 enables the solidified coating agent to be recovered in a continuous manner during the production process, thereby making it unnecessary for a filter to be provided inside the particle agitation chamber 2. In this way, solidified particles of the coating agent are furthermore prevented from accumulating inside the particle coating chamber 2. It ensues that sifting operations are no longer needed in view of separating coated particles from the coating agent that failed to interact. In addition, the flow of the carrying fluid can be directly exhausted into the room- possibly under previous filtration - as this is shown by the arrows on the upper side of the apparatus 15 in Figure 2.

As this has already been noted hereinbefore, a second purpose of the present invention is to provide a process for treating solid particles in a fluidized bed, which comprises the steps of:
- letting the particles to be treated into a particle agitation chamber;
- generating a flow of transport fluid for said particles inside said chamber;
- letting a liquid substance for treating said particles into said chamber,
wherein:
- said flow of transport fluid is accelerated inside a first zone of said particle agitation chamber;
- letting the particles to be coated into said flow of said transport fluid;
- atomizing or misting the liquid treatment substance into said acceleration zone so that said particles are treated with said treatment substance in the atomized state thereof;
- recovering upon atomization, said particles in a second zone around said first zone of said particle agitation chamber, and letting again into said acceleration zone.

The liquid coating substance may be prepared in accordance with conventional processes such as the ones used in the pharmaceutical industry or the food industry to produce waxes or other coating excipients in the liquid state thereof. Among the waxes and non-waxen excipients that are currently used for coating applications, the most common ones are: stearins, celluloses, polyvinyl pyrrolidone, crospovidone, gelatine, polyethylene glycol, gum arabic, mannitol, rice starch, and mixtures thereof. These substances are prepared in the liquid form thereof by means of appropriate solubilization and/or fusion methods such as they are most conventionally used in the art, so that they shall not be described any further. In the preferred case of waxes, these are prepared and held at a temperature situated anywhere between 25°C and 120°C , preferably between 45°C and 120°C, and still more preferably between 60°C and 80°C.

A particularly preferred wax is represented by vegetable stearin consisting of hydrogenated palm oil, which has proven quite advantageous in coating applications, especially in the coating of micro-organisms for pharmaceutical, food or veterinary uses, such as micro-organisms of the genus *Saccharomyces*, in particular species of *Saccharomyces cerevisiae.*

The particles to be coated consist of any chemical substance, either natural or synthetic, or a micro-organism. They are supplied in a state in which they are ready to undergo a coating process in accordance with any conventional method used in the art.

For example, as far as these substances are concerned, there may be provided for delivery pharmacologically active substances, such as antibiotics, anti-inflammatories, vitamins, and mixtures thereof, preferably in powder form. There may be used also food-grade substances, such as powders of food complements.

With reference to micro-organisms, these may include a wide variety of micro-organisms that require being coated with substances having the task of preserving them duly sheltered from potentially hostile environmental factors, such as moisture, high temperatures, highly acid or highly basic pH-values. Preferably, micro-organisms that may be used in this connection include yeasts, milk enzymes, and mixtures thereof. Among yeasts, particularly preferred are those of the *Saccharomyces*, since they are largely used in the agricultural and food industry in general, such as the species *Saccharomyces cerevisiae.* In general, micro-organisms are supplied in the viable freeze-dried state thereof.

As already noted hereinbefore, the flow of the particle carrying fluid may be generated by means of a blower that is adapted to ensure a flow rate of such fluid carrying the particles to be treated ranging from 2,500 to 4,000 m³/hr. The fluid itself may consist of air or any other inert medium that is preliminarily purified and conditioned prior to its hitting into contact with the particles to be treated, so as to create ideal conditions for the substance and preventing the same substance to suffer any deterioration. In particular, once the blower is started, the flow of the fluid follows a substantially rectilinear path, according to the pattern indicated by the three arrows in Figures 1 and 2.

The particles to be treated are preferably let in at a location situated between the inflow of the carrying fluid into the treatment chamber and the atomizing injector. Thereupon, the conditioned fluid flows into the treatment chamber, where it hits the particles delivered thereinto and carries them into the guide means.

The guide means have such conformation as to be able to create a Venturi effect, so that the carrying fluid -jointly with the particles entrained by it - is forced to flow into said means, where it undergoes an acceleration, and where it is channelled into a narrow, orderly and concentrated flow.

The atomizing/misting step performed with the aid of an appropriate injector or nozzle, such as the one described hereinbefore, is arranged to occur inside the guide means, which create the above-mentioned Venturi effect, preferably in proximity of the outlet thereof. During this step, the particles are hit by the tiny droplets of coating substance. Atomizing pressure is selected to range from 1 to 7 bar.

Advantageously, the process according to the present invention comprises the step of recovering the particles and letting them again into the Venturi-effect guide means through the afore-described passage. The occurrence of this step is ensured by preferably arranging the guide means inside and close to the walls of a portion in the shape of a reversed frustum of cone of the treatment chamber. In this case, therefore, at the outflow from said means, and owing exactly to the Venturi effect, the coated particles carried by the fluid undergo an expansion and slowdown effect, as a result of which they tend to fall downwards - by the simple effect of gravity - sidewise relative to said outflow from the guide means. When falling down, the particles end up by reaching the inlet of the guide means, where there in fact prevails a higher pressure that is effective in drawing them thereinto, thereby causing them to pass again through the atomizing step. In other words, while the flow of the carrying fluid follows the above-mentioned path, the particles -upon exiting said guide means - expand radially, i.e. around the guide means and, owing to the effect of gravity and the fact that they are no longer hit to any preponderant extent by the flow, fall down into said second zone, exactly around the guide means. As they reach at the bottom of the guide means, the particles are in some way sucked again into the guide means themselves, thereby bringing about a continuous recirculation pattern.

The above-described process can be allowed to continue for a period of time that varies from 15 to 30 minutes so as to enable - depending on the particles to be coated, the coating substances used, and the volumes being treated - an effective treatment to be achieved. In all cases, those skilled in the art are fully capable of modifying not only the treatment time, but also the other processing parameters in view of adapting the process to particular conditions or meeting particular needs.

Fully apparent from the above description is therefore the ability of the process and the apparatus according to the present invention to coat particles with coating agents by following a cyclic sequence of passages through a controlled, orderly system allowing an optimum coating quality to be ensured.

In fact, it has surprisingly been found that, when working with the above-described apparatus or according to the above-described process, it is possible coating particles of any kind using the atomization or misting method under conditions of low temperature, i.e. temperatures substantially in the order of the room-temperature values. This of course allows for dramatic savings to be obtained from the point of view of energy usage and, as a result, the apparatus itself can be made much simpler from the structural point of view. Such advantage is especially apparent when the need arises for the particles to be coated with waxes in the molten state thereof, wherein - thanks to the contrivances introduced by the present invention - the particles themselves, and in particular the micro-organisms, are prevented from suffering serious thermal shocks that would kill them. As this shall be also demonstrated further on with a comparative example, it has in fact been found that coating of the particles takes place very quickly and, in the case of molten waxes, these cools down almost immediately upon exiting the atomizing injector and settling onto the same particles. It therefore ensues that the particles - regardless of their being pure substances or micro-organisms - do not undergo any overheating.

The coated product has furthermore been found to exhibit an optimum and homogenous coating quality, with excellent properties in terms of both mechanical strength and water repellence, thereby allowing for optimum preservation of the product even under severe temperature, moisture and pH conditions.

A further advantage of the present invention lies in the fact that the coating process can be performed so as to cause the particles to undergo granulation. The fluidized-bed granulation process (also known as agglomeration) involves particles suspended in an air flow and an atomized fluid within the fluidized bed. The particles immersed in the flow-path of the atomized fluid become slightly wet and, as a result, sticky. The sticky particles impinge against other particles and adhere thereto, thereby forming a granule. It therefore ensues that - through the recirculation pattern described afore - the possibility arises for the degree of granulation or, in other words, the size of the resulting granules to be properly controlled.

An example of embodiment of the present invention is given below to merely illustrative and non-limiting purposes.

### COATING EXAMPLE

In the following example use has been made of dry viable brewer's yeast *Saccharomyces cerevisiae* in grains coated with vegetable stearin, i.e. hydrogenated palm oil. This example demonstrates the effectiveness of the coating method, wherein such coating is obtained in a production process that is totally conservative towards the raw material being coated.

### Starting ingredients:

- Dry viable brewer's yeast *Saccharomyces cerevisiae* in grains: 5.00 kg (50%),
- Vegetable stearin hydrogenated palm oil: 5.00 kg (50%).

### Process parameters:

- Temperature of the vegetable stearin in the molten state: 70°C,
- Pressure of the stearin pump: 1.5 bar,
- Temperature of the rinsing water for the wax atomizing system: 77°C,
- Flow rate of the turbulent air flow: 2,800 m³/minute,
- Temperature of the turbulent air flow: 25°C,
- Type of wax atomizing injector: no. 22 0.5588 mm (0.022 in.) bore diameter),
- Duration of production process: 23 minutes.

### Description of the process:

The amount of dry viable brewer's yeast *Saccharomyces cerevisiae* (5.00 kg) is introduced in the particle agitation chamber.

The amount (5.00 kg) of molten vegetable stearin hydrogenated palm oil is introduced in an appropriate reservoir connected with a pump, while duly calculating the excess amount thereof (2.00 kg) needed to cope with wastes and residues in the pipes and conduits of the atomization system.

The air delivery blower is started to generate the turbulent flow, while adjusting the speed thereof in accordance with the above-noted process parameters.

At this point, the pump connected with the reservoir containing the molten vegetable stearin is started, while adjusting the pressure thereof according to the above-noted process parameters, thereby causing the stearin to be atomized into the agitation chamber and starting thus the particle coating process.

The whole process is allowed to go on for the envisaged duration of 23 minutes.

Thereupon, the whole apparatus is switched off and the finished product is recovered.

### Analysis of the coated product

The first analytical check includes the visual assessment - under a microscope - of the appearance of the coated yeast granules. The granule shall appear of a crystalline white colour, with an even distribution of the coating agent as a token of perfect impermeability. It has been found that the coated product obtained in accordance with the present invention fully complies with these requirements.

The next analytical check includes verifying the CFU/g count of the uncoated raw material as compared with the CFU/g count of the coated product to reliably exclude any possible degradation effect suffered during the production process. Again, this analysis has shown that the count of the product of the invention does not vary to any significant extent following the coating treatment.

In particular, Table 1 below indicates that - starting from the dry viable yeast product in granules with a biological activity of 20 x 10⁹ CFU/g of yeasts - the count following treatment is indicative of optimum preservation values. The data according to the present invention (Designation: Yeast AR) have been compared with corresponding data from similar products coated using prior-art processes/apparatus (Designation: Yeast L).

**Table 1 - CFU/g count after coating**

| **Designation** | **Raw Material** | **Analysis Result, CFU/g** | **Average of Analysis Results, CFU/g** |
|---|---|---|---|
| Yeast AR | Sample 1 | 12 x 10⁹ | |
| | Sample 2 | 13 x 10⁹ | |
| | Sample 3 | 11 x 10⁹ | |
| | | | 12 x 10⁹ |
| | | | |
| Yeast L | Sample 1 | 11 x 10⁹ | |
| | Sample 2 | 10 x 10⁹ | |
| | Sample 3 | 13 x 10⁹ | |
| | | | 11 x 10⁹ |

It can be noticed that the values obtained in accordance with the present invention are slightly better than those resulting from the prior art.

### PRODUCTION OF SMALL CUBES INTENDED FOR AGROFOOD-RELATED USES

The coated yeast of the *Saccharomyces cerevisiae* is mixed with food-grade carrier substance in a proportion of 1 to 1000. Onto a ribbon mixer there are poured:
- 27.00 kg of food-grade carrier substance (flours intended for animal feeding)
- 3.00 kg of coated *Saccharomyces cerevisiae* yeast.

The mixer is then started and allowed to mix for 10 minutes. In this operation, which is particularly critical as far as the viability of the cells is concerned, it has been noticed that the yeasts coated in accordance with the present invention fail to show any degradation owing to no temperature rise or any other noxious condition for the viability of the yeast cells taking place in the process, actually. Only a mathematical dilution by 1000 times of the biological activity has been noticed.

Thereupon, the obtained mixture is transferred into the feeding hopper of the dicing machine and the dicing step is started.

### Description of the dicing step

The mixture is forced through the orifice of an extrusion die, whereby definitely high pressures are reached and the temperature rises significantly (70°C): these conditions act quite destructively upon the cells of *Saccharomyces cerevisiae* and the purpose of coating them with wax is to protect them thereagainst.

The diced product, which flows out in the form of a small cylinder from the extrusion dies, is cooled down in an air stream and collected into a hopper for the following processing steps, i.e. packaging.

The data concerning the viability of the diced yeasts coated in accordance with the present invention are set forth in Table 2 below, in comparison with corresponding data relating to particles coated according to the prior art.

**Table 2 - count after coating**

| **Mixture** | **CFU/g analysis result after mixing** | **Diced product** | **CFU/g analysis result after dicing** | **Average of CFU/g analysis result** |
|---|---|---|---|---|
| Sample AR | 62 x 10⁶ | Sample 1 | 5,200,000 | |
| | | Sample 2 | 7,200,000 | |
| | | Sample 3 | 7,400,000 | |
| | | Sample 4 | 5,100,000 | 6,225,000 |
| | | | | |
| Sample L | 33 x 10⁶ | Sample 1 | 3,900,000 | |
| | | Sample 2 | 5,400,000 | |
| | | Sample 3 | 3,500,000 | |
| | | Sample 4 | 4,300,000 | 4,275,000 |

From the comparison of these data it clearly emerges that the samples obtained in accordance with the present invention have a viability value that is significantly higher than the one found in samples obtained in accordance with the prior art.

## Claims

1. Apparatus (1) for coating solid particles in a fluidized bed through the atomization or misting of coating agents, comprising a particle agitation chamber (2) which includes a lower portion (21) and an intermediate portion (22), a conduit (5) for the delivery of a fluid aimed at creating the flow of said fluidized bed, the conduit being connected to said particle agitation chamber (2) via said lower portion (21), an injector (6) for the delivery of the coating agents in the form of minute droplets, the injector being situated inside guide means (7) to guide the carrying fluid of the fluidized bed into said agitation chamber, **characterized in that** said lower portion (21) of the agitation chamber (2) is directly connected to and tapered towards the delivery conduit (5) to create an upside down frustum of cone, and **in that** said guide means (7) comprises a hollow frustum of cone (70) positioned inside a first zone (3) of the particle agitation chamber (2), where said particles undergo an acceleration, said hollow frustum of cone (70) being in an upright position with the flared edge (71) thereof facing said conduit (5) and being positioned inside the upside down frustum of cone of said lower portion (21) so as to allow said carrying fluid to flow substantially rectilinear and to delimitate, jointly with the inner walls of said portion (21), an annular passage (8) positioned below the injector (6) and adapted to enable the particles to recirculate in the agitation chamber (2), the narrower rim (73) of said hollow frustum of cone (70) being located in said intermediate portion (22), wherein said frustum of cone (70) also comprises an annular extension (72) positioned at the level of the narrower rim (73) thereof lying opposite to said larger rim (71) thereof and said injector (6) is housed within said annular extension (72).

2. Apparatus (1) according to claim 1, wherein included within said particle agitation chamber (2) there are said first zone (3) as followed, downstream therefrom with reference to the flow direction of the carrier fluid, by a second zone (4) where the particles slow down.

3. Apparatus (1) according to claim 1 or 2, wherein said lower portion (21) of said particle agitation chamber (2) is connected with said delivery conduit (5) via a perforated plate (10) to create the fluidized bed.

4. Apparatus (1) according to any of the claims 1 to 3, wherein said injector (6) is provided
with an orifice of anywhere between 0.4064 and 0.5588 mm (0.016 and 0.022 inches) in diameter, with a slanting angle of the cone situated anywhere between 10° and 65°.

5. Plant (100) for the treatment of solid particles in a fluidized bed, comprising an apparatus (1) according to any of the claims 1 to 4 connected in a tightly sealed manner with an apparatus (15) for the recovery of the treatment agent.

6. Process for treating solid particles in a fluidized bed, comprising the steps of:
- letting the particles to be treated into a particle agitation chamber;
- generating a flow of carrying fluid to transport said particles inside said chamber;
- accelerating said carrying fluid inside a first zone of said particle agitation chamber;
- letting a liquid substance for treating said particles into said chamber,
- atomizing or misting the liquid treatment substance into said acceleration zone so that said particles are treated with said treatment substance in the atomized state thereof;
- letting the particles to be coated into said flow of said carrier fluid;
- recovering said particles after atomizing in a second zone around said first zone of said particle agitation chamber, and letting again into said acceleration zone,
**characterized in that**
said flow of carrying fluid is first forced inside a lower portion of the agitation chamber tapered towards a delivery conduit to create an upside down frustum of cone, then said fluid is accelerated inside an upright frustum of cone concentric with said lower portion following a substantially rectilinear path, and
the step of atomizing or misting the liquid treatment is carried out in an annular zone downstream said acceleration zone so that the flow of the particle carrying fluid is more regular and orderly.

7. Process according to claim 6, wherein said particles to be treated are in a powder form and selected from pharmacologically active substances, food complements, food substances, micro-organisms, or mixtures thereof, said liquid treatment substances being selected from waxes and non-waxen excipients and prepared at a temperature situated anywhere between 25°C and 120°C.

8. Process according to claim 6 or 7, wherein said flow of carrier fluid is generated to take place at a flow rate ranging from 2,500 to 4,000 m3/min at room temperature, and said liquid treatment substance is misted or atomized at a pressure situated anywhere between 2 and 7 bar, the process being carried on for a time comprised between 15 and 30 minutes.

9. Process according to any of the claims 6 to 8, wherein said process is carried out at room temperature.

10. Process according to any of the claims 6 to 9 to coat particles in powder form or granulating (agglomerating) the same.

## Patentansprüche

1. Vorrichtung (1) zur Beschichtung fester Partikel in einer Wirbelschicht durch Atomisierung oder Vernebelung von Beschichtungsmitteln, umfassend eine Partikelbewegungskammer (2), welche einen unteren Bereich (21) und einen mittleren Bereich (22) umfasst, einen Kanal (5) für die Zuführung eines Fluids, welches den Fluss der Wirbelschicht erzeugen soll, wobei der Kanal zu der Partikelbewegungskammer (2) über den unteren Bereich (21) verbunden ist, einen Injektor (6) für die Zuführung von Beschichtungsmitteln in der Form von kleinsten Tröpfchen, wobei der Injektor innerhalb von Führungseinrichtungen (7) angeordnet ist, um das Trägerfluid von der Wirbelschicht in die Bewegungskammer zu führen, **dadurch gekennzeichnet, dass** der untere Bereich (21) der Bewegungskammer (2) direkt mit dem Zuführkanal (5) verbunden ist und in Richtung des Zuführkanals (5) verjüngt ist, um einen auf den Kopf gestellten Kegelstumpf zu erzeugen, und dadurch dass die Führungseinrichtungen (7) einen hohlen Kegelstumpf (70) umfassen, welcher in einer ersten Zone (3) der Partikelbewegungskammer (2) angeordnet ist, in welcher die Partikel einer Beschleunigung unterworfen werden, wobei sich der hohle Kegelstumpf (70) in einer aufrechten Position befindet, bei welcher dessen aufgeweitete Kante (71) dem Kanal (5) gegenüberliegt und im Inneren des auf den Kopf gestellten Kegelstumpfes des unteren Bereichs (21) angeordnet ist, um so zu ermöglichen, dass das Trägerfluid im Wesentlichen geradlinig und begrenzt zusammenwirkend mit den Innenwänden des Bereichs (21) fließt, wobei ein kreisförmiger Durchgang (8) unter dem Injektor (6) angeordnet ist und geeignet ist, dass die Partikel in der Bewegungskammer (2) rezirkulieren, wobei die engere Kante (73) des hohlen Kegelstumpfs (70) in dem mittleren Bereich (22) angeordnet ist, und wobei der Kegelstumpf (70) eine kreisförmige Verlängerung (72) umfasst, welche an der Ebene bzw. der Höhe der engeren Kante (73) angeordnet ist, und der größeren Kante (71) gegenüberliegt und der Injektor (6) innerhalb der kreisförmigen Verlängerung (72) angeordnet ist.

2. Vorrichtung (1) nach Anspruch 1, wobei in der Partikelbewegungskammer (2) die erste Zone (3), welche stromabwärts von dieser unter Bezugnahme auf die Fließrichtung des Trägerfluids von einer zweiten Zone (4) gefolgt wird, in welcher die Partikel abgebremst werden, enthält.

3. Vorrichtung (1) nach Anspruch 1 oder 2, wobei der untere Bereich (21) der Partikelbewegungskammer (2) mit dem Zuführkanal (5) über eine perforierte Platte (10) verbunden ist, um die Wirbelschicht zu erzeugen.

4. Vorrichtung (1) nach einem der Ansprüche 1 bis 3, wobei der Injektor (6) mit einer Öffnung mit einem Durchmesser zwischen 0,4064 und 0,5588 mm (0,16 und 0,022 inch), mit einem schrägen Winkel des Kegels zwischen 10° und 65° bereitgestellt ist.

5. Anlage (100) zur Behandlung fester Partikel in einer Wirbelschicht, umfassend eine Vorrichtung (1) gemäß einem der Ansprüche 1 bis 4, welche in einer dichten Weise mit einer Vorrichtung (15) zur Rückgewinnung des Behandlungsmittels verbunden ist.

6. Verfahren zur Behandlung fester Partikel in einer Wirbelschicht, umfassend die Schritte:
- Einführen der zu behandelnden Partikel in eine Partikelbewegungskammer;
- Erzeugen eines Flusses des Trägerfluids, um die Partikel in die Kammer zu befördern;
- Beschleunigen des Trägerfluids innerhalb einer ersten Zone der Partikelbewegungskammer;
- Einführen einer flüssigen Substanz zur Behandlung der Partikel in die Kammer;
- Atomisieren oder Vernebeln der flüssigen Behandlungssubstanz in der Beschleunigungszone, so dass die Partikel mit der Behandlungssubstanz in deren atomisierten Zustand behandelt werden;
- Einführen der zu beschichtenden Partikel in den Fluss des Trägerfluids;
- Rückgewinnen der Partikel nach der Atomisierung in einer zweiten Zone, welche um die erste Zone der Partikelbewegungskammer angeordnet ist, und erneutes Einführen dieser in die Beschleunigungszone,
**dadurch gekennzeichnet, dass**
der Fluss des Trägerfluids zunächst in einen unteren Bereich der Bewegungskammer gedrängt wird, welcher in Richtung eines Zufuhrkanals verjüngt ist, um einen auf den Kopf gestellten Kegelstumpf zu erzeugen, wobei das Fluid anschließend im Inneren eines aufrechten Kegelstumpfes beschleunigt wird, welcher mit dem unteren Bereich konzentrisch ist, und im Wesentlichen einem geradlinigen Weg folgt, und
wobei der Schritt des Atomisierens oder Vernebelns der flüssigen Behandlung in einer kreisförmigen Zone stromabwärts der Beschleunigungszone durchgeführt wird, so dass der Fluss des Partikel tragenden Fluids regelmäßiger und gleichmäßiger ist.

7. Verfahren nach Anspruch 6, wobei die zu behandelnden Partikel in einer Pulverform vorliegen und gewählt sind, aus pharmakologisch aktiven Substanzen, Nahrungsergänzungsmittel, Nahrungsmittelsubstanzen, Mikroorganismen oder deren Mischungen, wobei die flüssigen Behandlungssubstanzen aus Wachsen und nicht gewachsten Hüfsstoffen gewählt sind und bei einer Temperatur in dem Bereich zwischen 25°C und 120°C hergestellt werden.

8. Verfahren nach Anspruch 6 oder 7, wobei der Fluss der Trägerfluids erzeugt wird, um mit einer Fließgeschwindigkeit in dem Bereich von 2500 bis 4000 m³/min bei Raumtemperatur stattzufinden und die flüssige Behandlungssubstanz bei einem Druck in dem Bereich zwischen 2 und 7 bar vernebelt oder atomisiert wird, wobei das Verfahren für einen Zeitraum zwischen 15 und 30 Minuten durchgeführt wird.

9. Verfahren nach einem der Ansprüche 6 bis 8, wobei das Verfahren bei Raumtemperatur durchgeführt wird.

10. Verfahren nach einem der Ansprüche 6 bis 9, um Partikel in Pulverform zu beschichten oder dieselben zu granulieren (agglomerieren).

## Revendications

1. Appareil (1) pour l'enrobage de particules solides dans un lit fluidisé à travers la pulvérisation ou la brumisation d'agents d'enrobage, comprenant une chambre d'agitation de particules (2) qui comprend une partie inférieure (21) et une partie intermédiaire (22), un conduit (5) pour la livraison d'un fluide destiné à créer l'écoulement dudit lit fluidisé, le conduit étant relié à ladite chambre d'agitation de particules (2) par l'intermédiaire de ladite partie inférieure (21), un injecteur (6) pour la livraison des produits d'enrobage sous la forme de minuscules gouttelettes, l'injecteur étant situé à l'intérieur de moyens de guidage (7) pour guider le fluide de transport du lit fluidisé dans ladite chambre d'agitation, **caractérisé en ce que** ladite partie inférieure (21) de la chambre d'agitation (2) est directement reliée et effilée vers le conduit (5) de livraison pour créer un tronc de cône renversé, et **en ce que** lesdits moyens de guidage (7) comprennent un tronc de cône creux (70) positionné à l'intérieur d'une première zone (3) de la chambre d'agitation de particules (2), où lesdites particules subissent une accélération, ledit tronc de cône creux (70) étant dans une position verticale avec le bord évasé (71) de celui-ci en regard dudit conduit (5) et étant positionné dans le tronc de cône renversé de ladite partie inférieure (21) de manière à permettre audit fluide de transport de s'écouler sensiblement rectilignement et de délimiter, conjointement avec les parois intérieures de ladite partie (21), un passage annulaire (8) positionné en dessous de l'injecteur (6) et adapté pour permettre aux particules de re-circuler dans la chambre d'agitation (2), le rebord le plus étroit (73) dudit tronc de cône creux (70) étant positionné dans ladite partie intermédiaire (22), et dans lequel ledit tronc de cône (70) comprend aussi un prolongement annulaire (72) positionné au niveau du rebord le plus étroit (73) se trouvant à l'opposé dudit grand rebord (71) et ledit injecteur (6) est logé à l'intérieur dudit prolongement annulaire (72).

2. Appareil (1) selon la revendication 1, dans lequel à l'intérieur de ladite chambre d'agitation de particule (2), il y a ladite première zone (3), suivie en aval de celle-ci en référence à la direction d'écoulement du fluide porteur, une seconde zone (4) où les particules ralentissent.

3. Appareil (1) selon la revendication 1 ou 2, dans lequel ladite partie inférieure (21) de ladite chambre d'agitation de particules (2) est reliée audit conduit de livraison (5) par l'intermédiaire d'une plaque perforée (10) pour créer le lit fluidisé.

4. Appareil (1) selon l'une quelconque des revendications 1 à 3, dans lequel ledit injecteur (6) est pourvu d'un orifice d'un diamètre compris entre 0,4064 et 0,5588 mm, avec un angle d'inclinaison du cône compris entre 10° et 65°.

5. Installation (100) pour le traitement de particules solides dans un lit fluidisé, comprenant un appareil (1) selon l'une quelconque des revendications 1 à 4 relié de manière étanche avec un appareil (15) pour la récupération de l'agent de traitement.

6. Procédé de traitement de particules solides dans un lit fluidisé, comprenant les étapes dans lesquelles :
- on introduit les particules à traiter dans une chambre d'agitation de particules;
- on génère un flux de fluide de transport pour transporter lesdites particules à l'intérieur de ladite chambre;
- on accélère ledit fluide de transport dans une première zone de ladite chambre d'agitation de particules;
- on introduit une substance liquide pour le traitement desdites particules dans ladite chambre,
- on pulvérise ou brumise la substance liquide de traitement dans ladite zone d'accélération de telle sorte que lesdites particules sont traitées avec ladite substance de traitement à l'état atomisé;
- on introduit les particules à enrober dans ledit écoulement dudit fluide de transport;
- on récupère lesdites particules après atomisation dans une seconde zone autour de ladite première zone de ladite chambre d'agitation de particules, et on les introduit de nouveau dans ladite zone d'accélération
**caractérisé en ce que**
ledit écoulement de fluide de transport est d'abord forcé à l'intérieur de la partie inférieure de la chambre d'agitation à travers un conduit de livraison pour créer un tronc de cône renversé, puis ledit fluide est accéléré dans un tronc de cône vertical concentrique avec ladite partie inférieure suivant un chemin sensiblement rectiligne, et
l'étape de pulvérisation ou brumisation du liquide de traitement est réalisée dans une zone annulaire en amont de ladite zone d'accélération de telle manière que l'écoulement du fluide de transport de particules est plus régulier et ordonné.

7. Procédé selon la revendication 6, dans lequel lesdites particules à traiter sont sous forme de poudre et choisis parmi des substances pharmacologiquement actives, des compléments alimentaires, des substances alimentaires, des micro-organismes, ou des mélanges de ceux-ci, lesdites substances liquides de traitement étant choisies parmi les substances issues de cires et les excipients non-cireux, et préparés à une température située entre 25°C et 120°C

8. Procédé selon la revendication 6 ou 7, dans lequel ledit écoulement de fluide de transport a un débit allant de 2,500 à 4,000 m³/min à température ambiante, et ladite substance liquide de traitement est brumisée ou pulvérisée à une pression comprise entre 2 et 7 bars, le procédé étant réalisé pendant une durée comprise entre 15 et 30 minutes.

9. Procédé selon l'une quelconque des revendications 6 à 8, dans lequel ledit procédé est effectué à température ambiante.

10. Procédé selon l'une quelconque des revendications 6 à 9 pour enrober des particules sous forme de poudre ou sous forme de granulés (agglomérats).
